# EUROPEAN PATENT APPLICATION

(11) **EP 4 535 861 A1**
(43) Date of publication of application: **09.04.2025**
(21) Application number: 22943170.5
(22) Date of filing: 26.05.2022
(51) Int. Cl.: H04W 36/00

(54) **CELL REDIRECTION METHOD AND APPARATUS AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: Dehns Germany Partnerschaft mbB
(86) International application number: PCT/CN2022/095391
(87) International publication number: WO 2023/225970

(57) **Abstract**

The present invention provides a cell redirection method and apparatus and a storage medium. The cell redirection method comprises: in response to determining that the distance between an operating high-speed train and a tunnel satisfies a specified distance condition, determining a target proportion of public network user equipments needing cell redirection from among public network user equipments that have accessed a high-speed rail dedicated cell corresponding to a base station (201); and sending a redirection indication message to the public network user equipments of the target proportion, wherein the redirection indication message indicates that the public network user equipments are redirected to a public network cell (202). According to the present invention, the performance of a high-speed rail user equipment when passing through the tunnel can be improved, a terminal service of the high-speed rail user equipment is effectively ensured, and the availability is high.

## Description

### TECHNICAL FIELD

The present disclosure relates to a field of communication, and in particular, to cell redirection methods and apparatuses and storage mediums.

### BACKGROUND

With rapid development of high-speed-railway technology and rapid deployment and opening of high-speed-railways, more and more users will select high-speed-trains to travel. To meet communication requirements of mobile users riding the high-speed-trains and ensure communication quality of the mobile users, an operator selects to deploy a high-speed-railway dedicated network to specifically serve the mobile users riding the high-speed-trains.

When a high-speed-train passes through a tunnel, a high-speed-train user equipment (UE) (or UE on high-speed-train) usually cannot normally complete a communication service due to a decrease in signal quality. Therefore, how to effectively improve a performance of the high-speed-train UE when passing through the tunnel is an urgent problem to be solved.

### SUMMARY

Embodiments of the present disclosure provide cell redirection methods and apparatuses, and storage mediums, to overcome the problem existing in related technologies.

According to a first aspect of embodiments of the present disclosure, a cell redirection method is provided. The method is performed by a base station and includes:
in response to determining that a distance between a running high-speed-train and a tunnel meets a specified distance condition, determining a target proportion of one or more public network UEs being to perform cell redirection with respect to public network UEs that have accessed a high-speed-railway dedicated cell for the base station; and
sending a redirection instruction message to the one or more public network UEs of the target proportion, where the redirection instruction message instructs the one or more public network UEs to redirect to a public network cell.

Optionally, the determining that a distance between a running high-speed-train and a tunnel meets a specified distance condition, includes any one of:
determining that the distance meets the specified distance condition, in response to determining that the distance is less than or equal to a preset distance threshold; or
determining that the distance meets the specified distance condition, in response to determining that the distance is within a preset distance threshold range.

Optionally, the method further includes:
sending configuration information to a high-speed-train UE that has accessed the high-speed-railway dedicated cell, where the configuration information is at least to configure the high-speed-train UE to measure and report association information, and the association information is for the base station to determine whether the distance meets the specified distance condition.

Optionally, the association information includes at least one of:
a signal receiving strength of the high-speed-train UE; or
first geographic location information of the high-speed-train UE.

Optionally, in a case that the association information is the signal receiving strength of the high-speed-train UE, the method further includes:
receiving the signal receiving strength reported by the high-speed-train UE; and
where the determining that a distance between a running high-speed-train and a tunnel meets a specified distance condition, includes:
   determining that the distance meets the specified distance condition, in response to determining that a decrease amplitude of the signal receiving strength reported by the high-speed-train UE is greater than or equal to a preset amplitude.

Optionally, in a case that the association information is the first geographic location information of the high-speed-train UE, the method further includes:
receiving the first geographic location information reported by the high-speed-train UE; and
determining, based on the first geographic location information and predetermined second geographic location information of the tunnel, the distance between the high-speed-train and the tunnel.

Optionally, the configuration information is further to configure a reporting condition for the high-speed-train UE to report the association information.

Optionally, the reporting condition includes any one of:
the signal receiving strength of the high-speed-train UE being less than or equal to a preset threshold; or
a duration in which the signal receiving strength of the high-speed-train UE is less than or equal to a preset threshold reaching a preset duration.

Optionally, the determining a target proportion of one or more public network UEs being to perform cell redirection with respect to public network UEs that have accessed a high-speed-railway dedicated cell for the base station, includes any one of:
determining the target proportion according to a data volume required by high-speed-train UEs that have accessed the high-speed-railway dedicated cell, where the target proportion is positively correlated with the data volume;
determining the target proportion according to a proportion of the data volume to a total load amount of the base station, where the target proportion is positively correlated with the proportion; or
determining the target proportion based on a moving speed of the high-speed-train, where the target proportion is positively correlated with the moving speed of the high-speed-train.

Optionally, the data volume includes any one of:
a total volume of uplink data;
a total volume of downlink data; or
a total volume of uplink data and downlink data.

Optionally, sending a redirection instruction message to the one or more public network UEs of the target proportion includes:
sending, when releasing one or more radio resource control (RRC) connections between the base station and the one or more public network UEs of the target proportion, the redirection instruction message to the one or more public network UEs of the target proportion.

Optionally, the method further includes:
sending, when releasing one or more RRC connections between the base station and the one or more public network UEs of the target proportion, a release reason indication message to the one or more public network UEs of the target proportion, where the release reason indication message is to indicate that a reason for the base station to release an RRC connection is to ensure service quality of a high-speed-train UE.

Optionally, the method further includes:
sending, when releasing one or more RRC connections between the base station and the one or more public network UEs of the target proportion, a time point indication message to the one or more public network UEs of the target proportion, where the time point indication message is to indicate an earliest time point at which the public network UE is allowed to access the base station again.

Optionally, the tunnel is within a coverage range of the base station.

According to a second aspect of embodiments of the present disclosure, a cell redirection method is provided. The method is performed by a high-speed-train UE and includes:
receiving configuration information sent by a base station, where the high-speed-train UE has accessed a high-speed-railway dedicated cell for the base station, where the configuration information is at least to configure the high-speed-train UE to measure and report association information, and the association information is for the base station to determine whether a distance between a running high-speed-train and a tunnel meets a specified distance condition; and
reporting, based on the configuration information, the measured association information to the base station.

Optionally, the association information includes at least one of:
a signal receiving strength of the high-speed-train UE; or
first geographic location information of the high-speed-train UE.

Optionally, the configuration information is further to configure a reporting condition for the high-speed-train UE to report the association information;
the reporting, based on the configuration information, the measured association information to the base station, includes:
reporting, in response to determining that the reporting condition is met, the measured association information to the base station.

Optionally, the reporting condition includes any one of:
the signal receiving strength of the high-speed-train UE being less than or equal to a preset threshold; or
a duration in which the signal receiving strength of the high-speed-train UE is less than or equal to a preset threshold reaching a preset duration.

Optionally, the tunnel is within a coverage range of the base station.

According to a third aspect of embodiments of the present disclosure, a cell redirection method is provided. The method is performed by a public network UE and includes:
receiving a redirection instruction message sent by a base station, where the public network UE has accessed a high-speed-railway dedicated cell for the base station; and
accessing a public network cell based on the redirection instruction message.

Optionally, the receiving a redirection instruction message sent by a base station, includes:
receiving the redirection instruction message sent by the base station to the public network UE when releasing a radio resource control (RRC) connection between the base station and the public network UE.

Optionally, the method further includes:
receiving a release reason indication message sent by the base station to the public network UE when releasing an RRC connection between the base station and the public network UE, where the release reason indication message is to indicate that a reason for the base station to release the RRC connection is to ensure service quality of a high-speed-train UE.

Optionally, the method further includes:
receiving a time point indication message sent by the base station to the public network UE when releasing an RRC connection between the base station and the public network UE, where the time point indication message is to indicate an earliest time point at which the public network UE is allowed to access the base station again; and
sending a request message to the base station when reaching the earliest time point or after reaching the earliest time point, where the request message is to request to establish the RRC connection with the base station.

Optionally, there is a tunnel within a coverage range of the base station.

According to a fourth aspect of embodiments of the present disclosure, a cell redirection apparatus is provided. The apparatus is applied to a base station and includes:
a determination module, configured to determine, in response to determining that a distance between a running high-speed-train and a tunnel meets a specified distance condition, a target proportion of one or more public network UEs being to perform cell redirection with respect to public network UEs that have accessed a high-speed-railway dedicated cell for the base station; and
a sending module, configured to send a redirection instruction message to the one or more public network UEs of the target proportion, where the redirection instruction message instructs the one or more public network UEs to redirect to a public network cell.

According to a fifth aspect of embodiments of the present disclosure, a cell redirection apparatus is provided. The apparatus is applied to a high-speed-train UE and includes:
a first receiving module, configured to receive configuration information sent by a base station, where the high-speed-train UE has accessed a high-speed-railway dedicated cell for the base station, where the configuration information is at least to configure the high-speed-train UE to measure and report association information, and the association information is for the base station to determine whether a distance between a running high-speed-train and a tunnel meets a specified distance condition; and
a reporting module, configured to report, based on the configuration information, the measured association information to the base station.

According to a sixth aspect of embodiments of the present disclosure, a cell redirection apparatus is provided. The apparatus is applied to a public network UE and includes:
a second receiving module, configured to receive a redirection instruction message sent by a base station, where the public network UE has accessed a high-speed-railway dedicated cell for the base station; and
an execution module, configured to access a public network cell based on the redirection instruction message.

According to a seventh aspect of embodiments of the present disclosure, a computer readable storage medium is provided. The computer readable storage medium stores a computer program, and the computer program is configured to perform any one cell redirection method in the side of the base station.

According to an eighth aspect of embodiments of the present disclosure, a computer readable storage medium is provided. The computer readable storage medium stores a computer program, and the computer program is configured to perform any one cell redirection method in the side of the high-speed-train UE.

According to a ninth aspect of embodiments of the present disclosure, a computer readable storage medium is provided. The computer readable storage medium stores a computer program, and the computer program is configured to perform any one cell redirection method in the side of the public network UE.

According to a tenth aspect of embodiments of the present disclosure, a cell redirection apparatus is provided. The apparatus includes:
a processor; and
a memory configured to store instructions executable by the processor;
where the processor is configured to perform any one cell redirection method in the side of the base station.

According to an eleventh aspect of embodiments of the present disclosure, a cell redirection apparatus is provided. The apparatus includes:
a processor; and
a memory configured to store instructions executable by the processor;
where the processor is configured to perform any one cell redirection method in the side of the high-speed-train UE.

According to a twelfth aspect of embodiments of the present disclosure, a cell redirection apparatus is provided. The apparatus includes:
a processor; and
a memory configured to store instructions executable by the processor;
where the processor is configured to perform any one cell redirection method in the side of the public network UE.

Technical solutions provided by the embodiments of the present disclosure may include the following beneficial effects.

In the embodiments of the present disclosure, in the case where the base station determines that the distance between the running high-speed-train and the tunnel meets the specified distance condition, the one or more public network UEs of the target proportion that have accessed the high-speed-railway dedicated cell for the base station may redirect to the public network cell. The present disclosure may improve the performance of the high-speed-train UE when passing through the tunnel, effectively ensure the terminal service of the high-speed-train UE, and have the high availability.

It should be understood that the above general description and the detailed description in the following text are only exemplary and explanatory, and cannot limit the present disclosure.

### BRIEF DESCRIPTION OF DRAWINGS

The accompanying drawings here are incorporated into the specification and form a part of the specification, show embodiments conforming to the present disclosure and are used together with the specification to explain principles of the present disclosure.
FIG. 1 is a schematic diagram of a high-speed-railway dedicated cell shown according to an exemplary embodiment.
FIG. 2 is a schematic flowchart of a cell redirection method shown according to an exemplary embodiment.
FIG. 3A is a schematic flowchart of another cell redirection method shown according to an exemplary embodiment.
FIG. 3B is a schematic flowchart of another cell redirection method shown according to an exemplary embodiment.
FIG. 4 is a schematic flowchart of another cell redirection method shown according to an exemplary embodiment.
FIG. 5 is a schematic flowchart of another cell redirection method shown according to an exemplary embodiment.
FIG. 6 is a schematic flowchart of another cell redirection method shown according to an exemplary embodiment.
FIG. 7 is a schematic flowchart of another cell redirection method shown according to an exemplary embodiment.
FIG. 8 is a schematic flowchart of another cell redirection method shown according to an exemplary embodiment.
FIG. 9 is a schematic flowchart of another cell redirection method shown according to an exemplary embodiment.
FIG. 10 is a schematic flowchart of another cell redirection method shown according to an exemplary embodiment.
FIG. 11 is a schematic flowchart of another cell redirection method shown according to an exemplary embodiment.
FIG. 12 is a schematic flowchart of another cell redirection method shown according to an exemplary embodiment.
FIG. 13 is a block diagram of a cell redirection apparatus shown according to an exemplary embodiment.
FIG. 14 is a block diagram of another cell redirection apparatus shown according to an exemplary embodiment.
FIG. 15 is a block diagram of another cell redirection apparatus shown according to an exemplary embodiment.
FIG. 16 is a schematic structural diagram of a cell redirection apparatus shown according to an exemplary embodiment of the present disclosure.
FIG. 17 is a schematic structural diagram of another cell redirection apparatus shown according to an exemplary embodiment of the present disclosure.
FIG. 18 is a schematic structural diagram of another cell redirection apparatus shown according to an exemplary embodiment of the present disclosure.

### DETAILED DESCRIPTION

Exemplary embodiments will be described in details herein, with examples thereof represented in the accompanying drawings. When the following description involves the accompanying drawings, same numerals in different figures represent same or similar elements unless otherwise indicated. Implementations described in the following exemplary embodiments do not represent all implementations consistent with the present disclosure. Rather, they are merely examples of apparatuses and methods consistent with some aspects of the present disclosure as detailed in the appended claims.

Terms used in the present disclosure are only for a purpose of describing specific embodiments, and are not intended to limit the present disclosure. Singular forms, "a/an," "the," and "this," used in the present disclosure and the appended claims are also intended to include majority forms, unless the context clearly indicates other meanings. It should also be understood that the term "and/or" used herein refers to and includes any or all possible combinations of at least one related listed item.

It should be understood that although terms, such as "first," "second," "third," etc., may be used in the present disclosure to describe various information, such information should not be limited by these terms. These terms are only used to distinguish a same type of information from each other. For example, without departing from the scope of the present disclosure, first information may also be referred to as second information, and similarly, the second information may also be referred to as the first information. Depending on the context, the term "if" used herein may be interpreted as "when," "while," or "in response to determining."

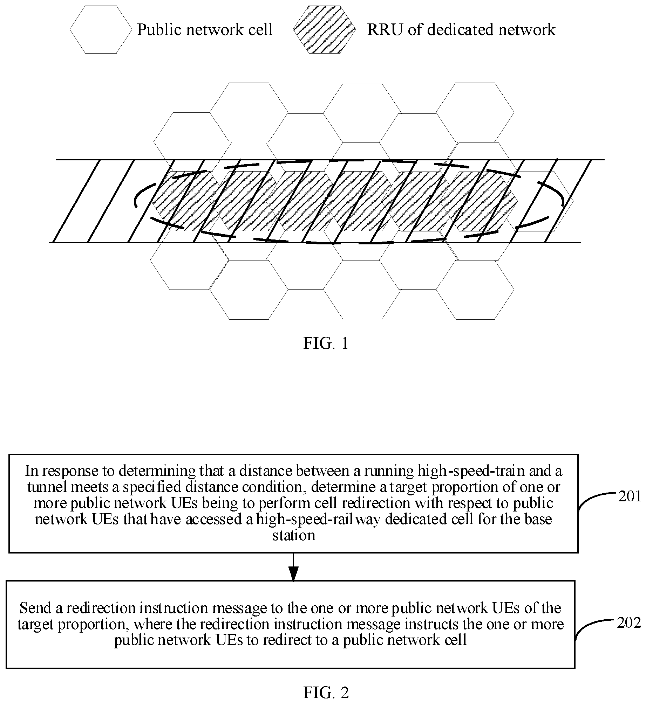

At present, there is a great difference between a high-speed-railway dedicated network and a common public long term evolution (LTE) network. In the high-speed-railway dedicated network, a plurality of remote radio units (RRUs) are cascaded together as a cell, to serve mobile users on the high-speed-train, as shown in FIG. 1.

According to frequency resource conditions of different regions, the high-speed-railway dedicated network and the common public LTE network may use the same frequency or different frequencies. In an actual network, because a high-speed-railway dedicated network usually has better coverage, UEs that are not on the high-speed-train often access the high-speed-railway dedicated network, especially in an urban region with a large population, which easily results in congestion of the high-speed-railway dedicated network, and thereby affects communication quality of mobile users on the high-speed-train. Especially, when a high-speed-train passes through a tunnel, a high-speed-train UE (or UE on high-speed-train) usually cannot normally complete a communication service due to a decrease in signal quality.

To solve the above technical problem, the present disclosure provides the following cell redirection methods. A cell redirection method provided in the present disclosure is described firstly from a side of a base station below.

An embodiment of the present disclosure provides a cell redirection method. Referring to FIG. 2, FIG. 2 is a flowchart of a cell redirection method shown according to an embodiment. The method may be performed by a base station. The method may include the following steps 201-202.

At step 201, in response to determining that a distance between a running high-speed-train and a tunnel meets a specified distance condition, a target proportion of one or more public network UEs being to perform cell redirection is determined with respect to public network UEs that have accessed a high-speed-railway dedicated cell for the base station.

In a possible implementation, the base station may divide UEs accessing the high-speed-railway dedicated cell for the base station into high-speed-train UEs and public network UEs (or UEs of public network).

The high-speed-train UE may be a UE used by a user on a running high-speed-train, and the public network UE may be a UE used by a user not on the high-speed-train.

A UE may determine, based on a moving speed of the UE, that the UE belongs to the high-speed-train UE or the public network UE, and notify the base station of a UE type to which the UE belongs, so that the base station distinguishes between different UE types.

The above description is merely an exemplary explanation, and the base station may alternatively determine the UE type in other manners, which is not limited in the present disclosure.

At step 202, a redirection instruction message is sent to the one or more public network UEs of the target proportion, where the redirection instruction message instructs the one or more public network UEs to redirect to a public network cell.

In the embodiment of the present disclosure, the base station may send the redirection instruction message to each of the one or more public network UEs of the target proportion, so that the public network UEs receiving the redirection instruction message redirect to the public network cell. The public network cell may be a common public LTE network cell.

In the above embodiment, the one or more public network UEs of the target proportion that have accessed the high-speed-railway dedicated cell for the base station redirect to the public network cell. Therefore, the performance of the high-speed-train UE when passing through the tunnel may be improved, the terminal service of the high-speed-train UE may be effectively ensured, and the availability is high.

In some optional embodiments, when the base station determines that the distance between the running high-speed-train and the tunnel is less than or equal to a preset distance threshold, the base station may determine that the distance meets the specified distance condition. In this case, the base station may determine a target proportion of the public network UEs being to perform cell redirection with respect to the public network UEs that have accessed the high-speed-railway dedicated cell for the base station, to send a redirection instruction message to each of the one or more public network UEs of the target proportion.

The preset distance threshold may be agreed by a protocol, or may be determined by the base station, which is not limited in the present disclosure.

In some optional embodiments, in the case where the base station determines that the distance between the running high-speed-train and the tunnel is within a preset distance threshold range, the base station may determine that the distance meets the specified distance condition. In this case, the base station may determine a target proportion of the public network UEs being to perform cell redirection with respect to the public network UEs that have accessed the high-speed-railway dedicated cell for the base station, to send a redirection instruction message to each of the one or more public network UEs of the target proportion.

The preset distance threshold range may be agreed by a protocol, or may be determined by the base station, which is not limited in the present disclosure.

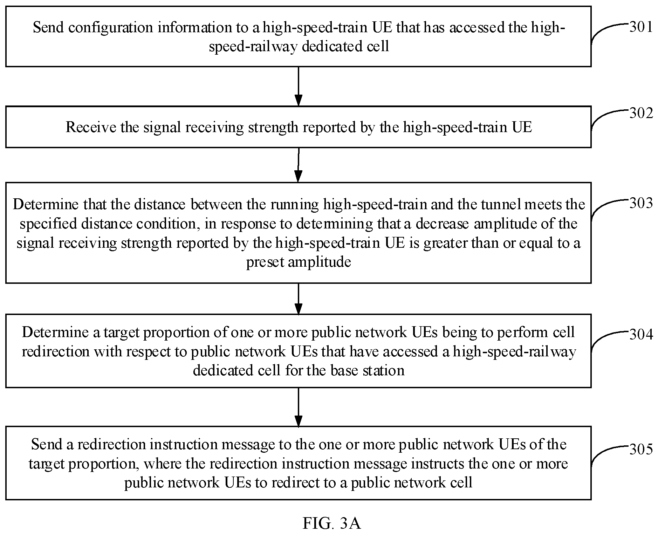

In some optional embodiments, referring to FIG. 3A, FIG. 3A is a flowchart of a cell redirection method shown according to an embodiment. The method may be performed by a base station. The method may include the following steps 301-305.

At step 301, configuration information is sent to a high-speed-train UE that has accessed the high-speed-railway dedicated cell.

In the embodiment of the present disclosure, the configuration information is at least to configure the high-speed-train UE to measure and report association information, and the association information is for the base station to determine whether the distance between the running high-speed-train and the tunnel meets the specified distance condition.

In a possible implementation, the configuration information is at least to configure the high-speed-train UE to measure and report a signal receiving strength of the high-speed-train UE.

At step 302, the signal receiving strength reported by the high-speed-train UE is received.

At step 303, it is determined that the distance between the running high-speed-train and the tunnel meets the specified distance condition, in response to determining that a decrease amplitude of the signal receiving strength reported by the high-speed-train UE is greater than or equal to a preset amplitude.

In the embodiment of the present disclosure, the base station may determine whether the distance between the high-speed-train and the tunnel meets the specified distance condition, according to the change situation of the signal receiving strength reported by the high-speed-train UE.

In the case where the base station determines that the signal receiving strength decreases and the decrease amplitude is greater than or equal to a preset amplitude, the base station determines that the distance meets the specified distance condition. In other cases, for example, the signal receiving strength reported by the high-speed-train UE increases, or the signal receiving strength decreases, but the decrease amplitude is less than the preset amplitude, the base station may determine that the distance does not meet the specified distance condition.

At step 304, a target proportion of one or more public network UEs being to perform cell redirection is determined with respect to public network UEs that have accessed a high-speed-railway dedicated cell for the base station.

At step 305, a redirection instruction message is sent to the one or more public network UEs of the target proportion, where the redirection instruction message instructs the one or more public network UEs to redirect to a public network cell.

In the embodiment of the present disclosure, the base station may send the redirection instruction message to each of the one or more public network UEs of the target proportion, so that the public network UEs receiving the redirection instruction message redirect to the public network cell. The public network cell may be a common public LTE network cell.

In the above embodiment, the base station may use a mobility characteristic of the high-speed-train UE to enable the high-speed-train UE to report the signal receiving strength, and the base station may determine, based on the signal receiving strength, whether the distance between the high-speed-train and the tunnel meets the specified distance condition, so that in the case where the distance meets the specified distance condition, the one or more public network UEs of the target proportion that have accessed the high-speed-railway dedicated cell for the base station redirect to the public network cell. Therefore, the performance of the high-speed-train UE when passing through the tunnel may be improved, the terminal service of the high-speed-train UE may be effectively ensured, and the availability is high.

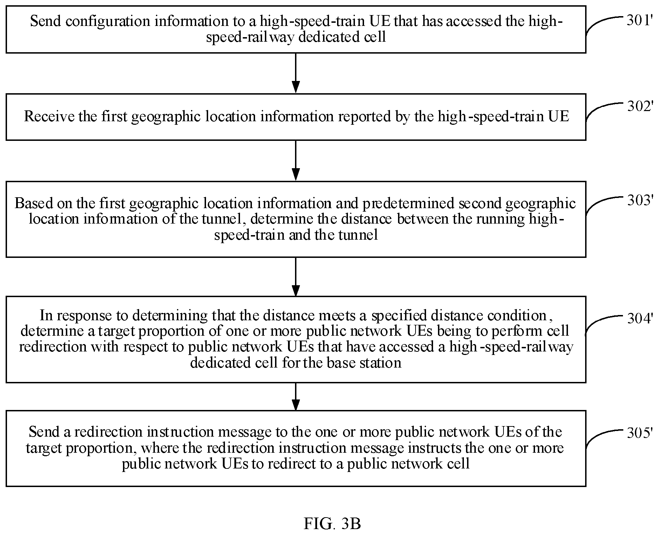

In some optional embodiments, referring to FIG. 3B, FIG. 3B is a flowchart of a cell redirection method shown according to an embodiment. The method may be performed by a base station. The method may include the following steps 301'-305'.

At step 301', configuration information is sent to a high-speed-train UE that has accessed the high-speed-railway dedicated cell.

In the embodiment of the present disclosure, the configuration information is at least to configure the high-speed-train UE to measure and report association information, and the association information is for the base station to determine the distance between the running high-speed-train and the tunnel.

In a possible implementation, the configuration information is at least to configure the high-speed-train UE to measure and report first geographic location information of the high-speed-train UE. Specifically, the first geographic location information may be longitude and latitude information.

At step 302', the first geographic location information reported by the high-speed-train UE is received.

At step 303', based on the first geographic location information and predetermined second geographic location information of the tunnel, the distance between the running high-speed-train and the tunnel is determined.

In the embodiment of the present disclosure, the base station may predetermine the second geographic location information of the tunnel. Specifically, the second geographic location information may be longitude and latitude information. The base station may determine the distance between the high-speed-train and the tunnel based on the first geographic location information and the second geographic location information.

At step 304', in response to determining that the distance meets a specified distance condition, a target proportion of one or more public network UEs being to perform cell redirection is determined with respect to public network UEs that have accessed a high-speed-railway dedicated cell for the base station.

In a possible implementation, if the distance is less than or equal to a preset distance threshold, the base station determines that the distance meets the specified distance condition.

In another possible implementation, if the distance is within a preset distance threshold range, the base station determines that the distance meets the specified distance condition.

At step 305', a redirection instruction message is sent to the one or more public network UEs of the target proportion, where the redirection instruction message instructs the one or more public network UEs to redirect to a public network cell.

In the embodiment of the present disclosure, the base station may send the redirection instruction message to each of the one or more public network UEs of the target proportion, so that the public network UEs receiving the redirection instruction message redirect to the public network cell. The public network cell may be a common public LTE network cell.

In the above embodiment, the base station may use a mobility characteristic of the high-speed-train UE to enable the high-speed-train UE to report the first geographic location information, and the base station may determine, based on the first geographic location information and the second geographic location information of the tunnel, whether the distance between the high-speed-train and the tunnel meets the specified distance condition, so that in the case where the distance meets the specified distance condition, the one or more public network UEs of the target proportion that have accessed the high-speed-railway dedicated cell for the base station redirect to the public network cell. Therefore, the performance of the high-speed-train UE when passing through the tunnel may be improved, the terminal service of the high-speed-train UE may be effectively ensured, and the availability is high.

It should be understood that the base station may determine, according to the first geographic location information reported by the high-speed-train UE, whether the distance between the high-speed-train and the tunnel meets the specified distance condition, may determine, according to the signal receiving strength reported by the high-speed-train UE, whether the distance between the high-speed-train and the tunnel meets the specified distance condition, or may determine, according to both the first geographic location information reported by the high-speed-train UE and the signal receiving strength reported by the high-speed-train UE, whether the distance between the high-speed-train and the tunnel meets the specified distance condition, to more accurately perform the determination.

In some optional embodiments, in addition to configuring the high-speed-train UE to measure and report the association information, the configuration information may be further to configure a reporting condition for the high-speed-train UE to report the association information.

In a possible implementation, the reporting condition may be the signal receiving strength of the high-speed-train UE being less than or equal to a preset threshold.

The high-speed-train UE may report the association information to the base station in the case where the signal receiving strength is less than or equal to the preset threshold. The association information may be for the base station to determine whether the distance between the high-speed-train and the tunnel meets the specified distance condition.

In another possible implementation, the reporting condition may be a duration in which the signal receiving strength of the high-speed-train UE is less than or equal to a preset threshold reaching a preset duration.

The high-speed-train UE may report the association information to the base station in the case where the duration in which the signal receiving strength is less than or equal to the preset threshold reaching the preset duration. That is, the high-speed-train UE reports the association information to the base station in the case where the signal receiving strength is continuously poor. The association information may be for the base station to determine whether the distance between the high-speed-train and the tunnel meets the specified distance condition.

In the above embodiment, the base station may configure, with the configuration information, the high-speed-train UE to report the association information, and in addition, the base station may further configure, with the configuration information, a reporting condition for the high-speed-train UE to report the association information, so as to fully utilize a mobility characteristic of the high-speed-train UE to determine whether the one or more public network UEs of the target proportion need to redirect to a public network cell, which is easy to be implemented and has high availability.

In some optional embodiments, the base station may use, but is not limited to, the following manners to determine the target proportion of the public network UEs that are to perform cell redirection.

In a first manner, the base station may determine the target proportion according to a data volume required by high-speed-train UEs that have accessed the high-speed-railway dedicated cell.

In a possible implementation, the data volume required by the high-speed-train UE includes any one of: a total volume of uplink data, a total volume of downlink data, or a total volume of the uplink data and the downlink data.

In the embodiment of the present disclosure, the target proportion is positively correlated with the data volume. The greater the data volume is, and the greater the target proportion, determined by the base station, of the public network UEs being to perform the cell redirection is. The smaller the data volume is, and the smaller the target proportion, determined by the base station, of the public network UEs being to perform the cell redirection is.

In a second manner, the base station may determine the target proportion according to a proportion of the data volume required by high-speed-train UEs that have accessed the high-speed-railway dedicated cell to a total load amount of the base station.

In a possible implementation, the data volume required by the high-speed-train UE includes any one of: a total volume of uplink data, total volume of downlink data, or total volume of the uplink data and the downlink data.

In the embodiment of the present disclosure, the target proportion is positively correlated with the proportion. The greater the proportion of the data volume required by the high-speed-train UEs to the total load amount of the base station is, and the greater the target proportion, determined by the base station, of the public network UEs being to perform the cell redirection is. The smaller the proportion of the data volume required by the high-speed-train UEs to the total load amount of the base station is, and the smaller the target proportion, determined by the base station, of the public network UEs being to perform the cell redirection is.

In a third manner, the target proportion is determined based on a moving speed of the high-speed-train.

In the embodiment of the present disclosure, the target proportion is positively correlated with the moving speed of the high-speed-train. The faster the high-speed-train moves, and the greater the target proportion, determined by the base station, of the public network UEs being to perform the cell redirection is. The slower the high-speed-train moves, and the smaller the target proportion, determined by the base station, of the public network UEs being to perform the cell redirection is.

In the above embodiment, the base station may flexibly determine the target proportion of the public network UEs being to perform the cell redirection, which has high availability.

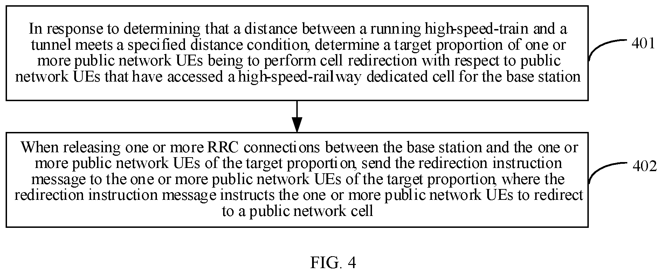

In some optional embodiments, referring to FIG. 4, FIG. 4 is a flowchart of a cell redirection method shown according to an embodiment. The method may be performed by a base station. The method may include the following steps 401-402.

At step 401, in response to determining that a distance between a running high-speed-train and a tunnel meets a specified distance condition, a target proportion of one or more public network UEs being to perform cell redirection is determined with respect to public network UEs that have accessed a high-speed-railway dedicated cell for the base station.

In a possible implementation, the base station may divide UEs accessing the high-speed-railway dedicated cell for the base station into high-speed-train UEs and public network UEs.

The high-speed-train UE may be a UE used by a user on a running high-speed-train, and the public network UE may be a UE used by a user not on the high-speed-train. A UE may determine, based on a moving speed of the UE, that the UE belongs to the high-speed-train UE or the public network UE, and notify the base station of a UE type to which the UE belongs, so that the base station distinguishes between different UE types. The above description is merely an exemplary explanation, and the base station may alternatively determine the UE type in other manners, which is not limited in the present disclosure.

At step 402, when releasing one or more radio resource control (RRC) connections between the base station and the one or more public network UEs of the target proportion, the redirection instruction message is sent to the one or more public network UEs of the target proportion, where the redirection instruction message instructs the one or more public network UEs to redirect to a public network cell.

In the embodiment of the present disclosure, when releasing one or more RRC connections between the base station and the one or more public network UEs of the target proportion, the base station may send the redirection instruction message to each of the one or more public network UEs of the target proportion, so that the public network UEs that receive the redirection instruction message redirect to the public network cell. The public network cell may be a common public LTE network cell.

In the above embodiment, the base station may send the redirection instruction message to each of the one or more public network UEs of the target proportion when releasing the RRC connections, so that the public network UEs redirect to the public network cell, which thereby improves performance of the high-speed-train UEs when passing through the tunnel, effectively ensure terminal services of the high-speed-train UEs, and have the high availability.

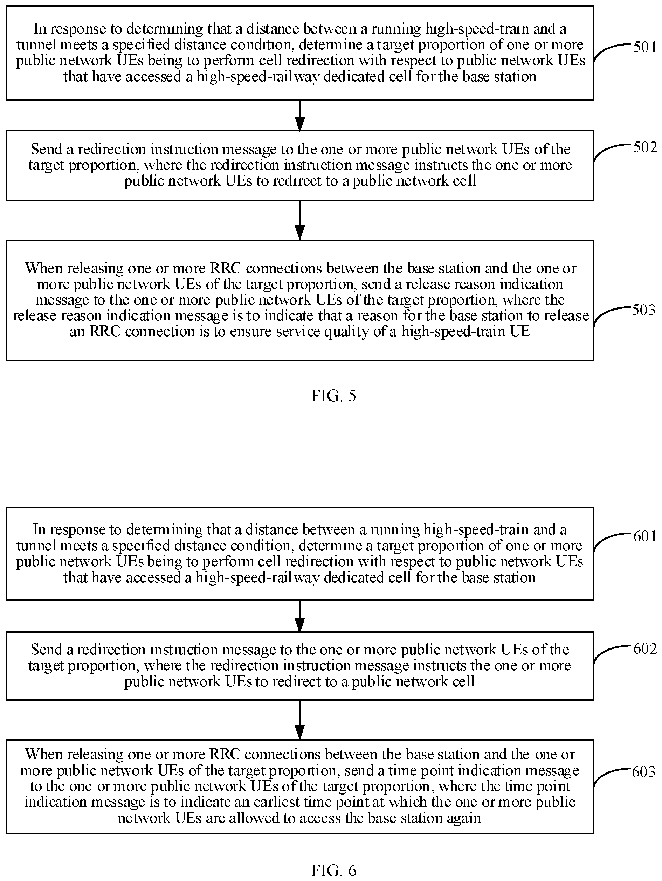

In some optional embodiments, referring to FIG. 5, FIG. 5 is a flowchart of a cell redirection method shown according to an embodiment. The method may be performed by a base station. The method may include the following steps 501-502.

At step 501, in response to determining that a distance between a running high-speed-train and a tunnel meets a specified distance condition, a target proportion of one or more public network UEs being to perform cell redirection is determined with respect to public network UEs that have accessed a high-speed-railway dedicated cell for the base station.

In a possible implementation, the base station may divide UEs accessing the high-speed-railway dedicated cell for the base station into high-speed-train UEs and public network UEs.

The high-speed-train UE may be a UE used by a user on a running high-speed-train, and the public network UE may be a UE used by a user not on the high-speed-train. A UE may determine, based on a moving speed of the UE, that the UE belongs to the high-speed-train UE or the public network UE. For example, the UE may determine, in the case where determining that the moving speed of the UE is greater than a preset speed threshold, that the UE belongs to the high-speed-train UE, otherwise, may determine that the UE belongs to the public network UE, and notify the base station of the UE type to which the UE belongs, so that the base station distinguishes between different UE types. The above description is merely an exemplary explanation, and the base station may alternatively determine the UE type in other manners, which is not limited in the present disclosure.

At step 502, a redirection instruction message is sent to the one or more public network UEs of the target proportion, where the redirection instruction message instructs the one or more public network UEs to redirect to a public network cell.

In the embodiment of the present disclosure, the base station may send the redirection instruction message to each of the one or more public network UEs of the target proportion, so that the public network UEs receiving the redirection instruction message redirect to the public network cell. The public network cell may be a common public LTE network cell.

At step 503, when releasing one or more RRC connections between the base station and the one or more public network UEs of the target proportion, a release reason indication message is sent to the one or more public network UEs of the target proportion, where the release reason indication message is to indicate that a reason for the base station to release an RRC connection is to ensure service quality of a high-speed-train UE.

The sequence of performing the step 502 and step 503 is not limited in the embodiment of the present disclosure. Both steps may be performed when releasing the RRC connections between the base station and the public network UEs of the target proportion.

It should be understood that, in the embodiment of the present disclosure, the release reason indication message and the redirection instruction message may be separately sent to the public network UE, or may be sent to the public network UE in same information, that is, one piece of information is used to instruct the public network UE to redirect to the public network cell and notify the public network UE that the reason for the base station to release the RRC connection is to ensure the service quality of the high-speed-train UE.

In the embodiment of the present disclosure, the base station may send a release reason indication message to each of the one or more public network UEs of the target proportion. The base station notifies the one or more public network UEs of the target proportion with the release reason indication message that the reason for the base station to release the RRC connections is to ensure the service quality of the high-speed-train UEs. Therefore, the one or more public network UEs of the target proportion with the released RRC connections are prevented from accessing the base station again, resulting in affecting the performance of the high-speed-train UEs when passing through the tunnel.

In the above embodiment, the performance of the high-speed-train UE when passing through the tunnel may be improved, the terminal service of the high-speed-train UE may be effectively ensured, and the availability is high.

In some optional embodiments, referring to FIG. 6, FIG. 6 is a flowchart of a cell redirection method shown according to an embodiment. The method may be performed by a base station. The method may include the following steps 601-603.

At step 601, in response to determining that a distance between a running high-speed-train and a tunnel meets a specified distance condition, a target proportion of one or more public network UEs being to perform cell redirection is determined with respect to public network UEs that have accessed a high-speed-railway dedicated cell for the base station.

In a possible implementation, the base station may divide UEs accessing the high-speed-railway dedicated cell for the base station into high-speed-train UEs and public network UEs.

The high-speed-train UE may be a UE used by a user on a running high-speed-train, and the public network UE may be a UE used by a user not on the high-speed-train. A UE may determine, based on a moving speed of the UE, that the UE belongs to the high-speed-train UE or the public network UE, and notify the base station of a UE type to which the UE belongs, so that the base station distinguishes between different UE types. The above description is merely an exemplary explanation, and the base station may alternatively determine the UE type in other manners, which is not limited in the present disclosure.

At step 602, a redirection instruction message is sent to the one or more public network UEs of the target proportion, where the redirection instruction message instructs the one or more public network UEs to redirect to a public network cell.

In the embodiment of the present disclosure, the base station may send the redirection instruction message to each of the one or more public network UEs of the target proportion, so that the public network UEs receiving the redirection instruction message redirect to the public network cell. The public network cell may be a common public LTE network cell.

At step 603, when releasing one or more RRC connections between the base station and the one or more public network UEs of the target proportion, a time point indication message is sent to the one or more public network UEs of the target proportion, where the time point indication message is to indicate an earliest time point at which the one or more public network UEs are allowed to access the base station again.

The sequence of performing the step 602 and step 603 is not limited in the embodiment of the present disclosure. Both steps may be performed when releasing the RRC connections between the base station and the public network UEs of the target proportion.

In the embodiment of the present disclosure, the base station may send a time point indication message to each of the one or more public network UEs of the target proportion. The base station notifies, with the time point indication message, the one or more public network UEs of the target proportion of the earliest time point at which the public network UEs are allowed to access the base station again. Therefore, the one or more public network UEs of the target proportion with the released RRC connections are prevented from accessing the base station again before the earliest time point. It should be understood that, in the embodiment of the present disclosure, the time point indication message and the redirection instruction message may be separately sent to the public network UE, or may be sent to the public network UE in same information, that is, one piece of information is used to instruct the public network UE to redirect to the public network cell and notify the public network UE of the earliest time point at which the public network UE is allowed to access the base station again.

In the above embodiment, the performance of the high-speed-train UE when passing through the tunnel may be improved, the terminal service of the high-speed-train UE may be effectively ensured, and the availability is high.

In some optional embodiments, when releasing one or more RRC connections between the base station and the one or more public network UEs of the target proportion, the base station may perform at least one of:
sending a redirection instruction message to the one or more public network UEs of the target proportion, where the redirection instruction message instructs the one or more public network UEs to redirect to a public network cell;
sending a release reason indication message to the one or more public network UEs of the target proportion, where the release reason indication message is to indicate that a reason for the base station to release an RRC connection is to ensure service quality of a high-speed-train UE; or
sending a time point indication message to the one or more public network UEs of the target proportion, where the time point indication message is to indicate an earliest time point at which the public network UE is allowed to access the base station again.

In the embodiment of the present disclosure, the base station may perform at least one of the above, to prevent the public network UE from accessing the base station again at an improper time point, and occupying a resource of the base station. The performance of the high-speed-train UE when passing through the tunnel is improved, the terminal service of the high-speed-train UE is effectively ensured, and the availability is high.

In some optional embodiments, the tunnel may be within a coverage range of the base station. Therefore, the base station may redirect the one or more public network UEs of the target proportion to the public network cell, so that the performance of the high-speed-train UEs when passing through the tunnel is improved, and the terminal services of the high-speed-train UEs are effectively ensured.

A cell reselection method provided in the present disclosure is described from a side of a high-speed-train UE below. It should be noted that the high-speed-train UE refers to a UE used by a user on a high-speed-train. The UE may determine, based on a moving speed of the UE, whether the UE belongs to the high-speed-train UE.

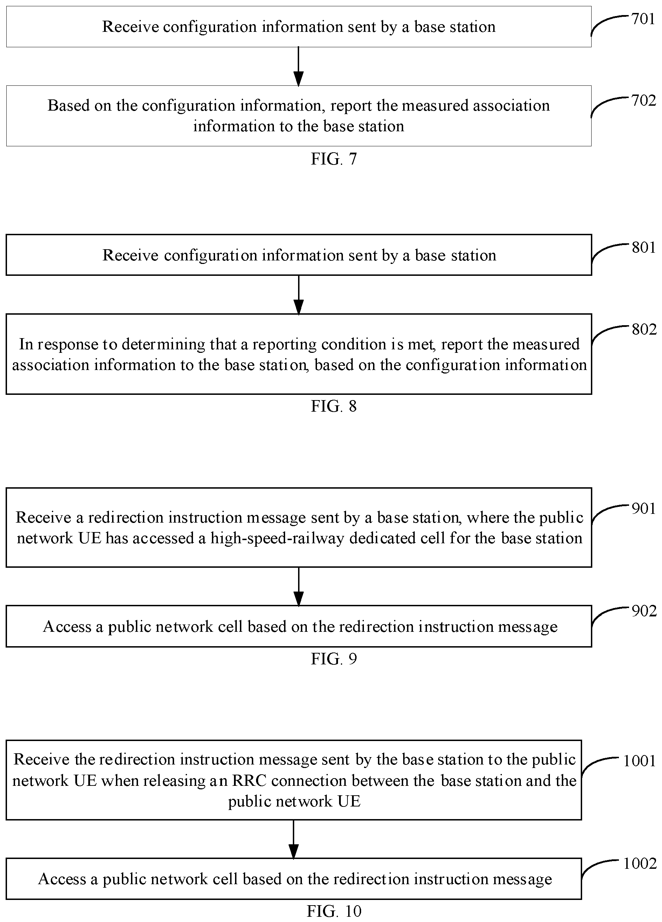

An embodiment of the present disclosure provides a cell redirection method. Referring to FIG. 7, FIG. 7 is a flowchart of a cell redirection method shown according to an embodiment. The method may be performed by a high-speed-train UE. The method may include the following steps 701-702.

At step 701, configuration information sent by a base station is received.

In the embodiment of the present disclosure, the high-speed-train UE has accessed a high-speed-railway dedicated cell for the base station, where the configuration information is at least to configure the high-speed-train UE to measure and report association information, and the association information is for the base station to determine whether a distance between a running high-speed-train and a tunnel meets a specified distance condition.

In a possible implementation, the configuration information is at least to configure the high-speed-train UE to measure and report a signal receiving strength of the high-speed-train UE. The base station may determine, based on the signal receiving strength of the high-speed-train UE, whether the distance between the running high-speed-train and the tunnel within the coverage range of the base station meets the specified distance condition. Specifically, the base station may determine that the distance meets the specified distance condition in the case where a decrease amplitude of the signal receiving strength is greater than or equal to a preset amplitude; otherwise, the base station may determine that the distance does not meet the specified distance condition.

In another possible implementation, the configuration information is at least to configure the high-speed-train UE to measure and report first geographic location information of the high-speed-train UE. The base station may determine the distance between the running high-speed-train and the tunnel based on both first geographic location information of the high-speed-train UE and a predetermined second geographic location information of the tunnel, and then determine whether the distance meets the specified distance condition. The first geographic location information and/or the second geographic location information may be longitude and latitude information.

At step 702, based on the configuration information, the measured association information is reported to the base station.

In the above embodiment, the high-speed-train UE may measure and report the association information based on the configuration information sent by the base station, to assist the base station to determine whether the distance between the running high-speed-train and the tunnel meets the specified distance condition, or to assist the base station to determine the distance. Subsequently, in the case where the base station determines that the distance between the running high-speed-train and the tunnel meets the specified distance condition, the base station may redirect the one or more public network UEs of the target proportion that have accessed the high-speed-railway dedicated cell for the base station to the public network cell. The performance of the high-speed-train UE when passing through the tunnel is improved, the terminal service of the high-speed-train UE is effectively ensured, and the availability is high.

In some optional embodiments, referring to FIG. 8, FIG. 8 is a flowchart of a cell redirection method shown according to an embodiment. The method may be performed by a high-speed-train UE. The method may include the following steps 601-603.

At step 801, configuration information sent by a base station is received.

In the embodiment of the present disclosure, the high-speed-train UE has accessed a high-speed-railway dedicated cell for the base station, where the configuration information is at least to configure the high-speed-train UE to measure and report association information, and the association information is for the base station to determine whether a distance between a running high-speed-train and a tunnel meets a specified distance condition.

In a possible implementation, the configuration information is at least to configure the high-speed-train UE to measure and report a signal receiving strength of the high-speed-train UE. The base station may determine, based on the signal receiving strength of the high-speed-train UE, whether the distance between the running high-speed-train and the tunnel within the coverage range of the base station meets the specified distance condition. Specifically, the base station may determine that the distance meets the specified distance condition in the case where a decrease amplitude of the signal receiving strength is greater than or equal to a preset amplitude; otherwise, the base station may determine that the distance does not meet the specified distance condition.

In another possible implementation, the configuration information is at least to configure the high-speed-train UE to measure and report first geographic location information of the high-speed-train UE. The base station may determine the distance between the running high-speed-train and the tunnel within the coverage range of the base station, based on both first geographic location information of the high-speed-train UE and predetermined second geographic location information of the tunnel, and then determine whether the distance meets the specified distance condition. The first geographic location information and/or the second geographic location information may be longitude and latitude information.

In an embodiment of the present disclosure, the configuration information is further to configure a reporting condition for the high-speed-train UE to report the association information.

In a possible implementation, the reporting condition may include the signal receiving strength of the high-speed-train UE being less than or equal to a preset threshold.

In another possible implementation, the reporting condition may include a duration in which the signal receiving strength of the high-speed-train UE is less than or equal to a preset threshold reaching a preset duration.

At step 802, in response to determining that a reporting condition is met, the measured association information is reported to the base station, based on the configuration information.

In a possible implementation, the high-speed-train UE reports the measured association information to the base station, in the case where determining that the measured signal receiving strength is less than or equal to a preset threshold. The association information may include at least one of: a signal receiving strength of the high-speed-train UE, or first geographic location information of the high-speed-train UE.

In another possible implementation, the high-speed-train UE reports the measured association information to the base station, in the case where determining that a duration in which the measured signal receiving strength is less than or equal to a preset threshold reaches a preset duration, that is, in the case where the signal receiving strength is continuously poor. The association information may include at least one of: a signal receiving strength of the high-speed-train UE, or first geographic location information of the high-speed-train UE.

In the above embodiment, the high-speed-train UE may report the association information to the base station in the case where the reporting condition is met, to assist the base station to determine whether the distance between the running high-speed-train and the tunnel meets the specified distance condition, or to assist the base station to determine the distance. The performance of the high-speed-train UE when passing through the tunnel is also improved, the terminal service of the high-speed-train UE is effectively ensured, and the availability is high.

In some optional embodiments, the tunnel may be within a coverage range of the base station.

A cell redirection method provided in the present disclosure is described from a side of a public network UE below. It should be noted that the public network UE refers to a UE used by a user not on a high-speed-train. The UE may determine, based on a moving speed of the UE, whether the UE belongs to the public network UE.

An embodiment of the present disclosure provides a cell redirection method. Referring to FIG. 9, FIG. 9 is a flowchart of a cell redirection method shown according to an embodiment. The method may be performed by a public network UE. The method may include the following steps 901-902.

At step 901, a redirection instruction message sent by a base station is received, where the public network UE has accessed a high-speed-railway dedicated cell for the base station.

At step 902, a public network cell is accessed based on the redirection instruction message.

In the embodiment of the present disclosure, the public network cell may refer to a public LTE network cell.

In the above embodiment, the public network UE may access the public network cell based on the redirection instruction message sent by the base station, to preventing the public network UE from occupying the resource of the high-speed-railway dedicated cell, so that the base station may better provide a service for the high-speed-train UE, which may particularly improve the performance of the high-speed-train UE when passing through the tunnel, effectively ensure the terminal service of the high-speed-train UE, and have the high availability.

In some optional embodiments, referring to FIG. 10, FIG. 10 is a flowchart of a cell redirection method shown according to an embodiment. The method may be performed by a public network UE. The method may include the following steps 1001-1002.

At step 1001, the redirection instruction message sent by the base station to the public network UE when releasing an RRC connection between the base station and the public network UE is received.

The public network UE has accessed a high-speed-railway dedicated cell for the base station.

At step 1002, a public network cell is accessed based on the redirection instruction message.

In the embodiment of the present disclosure, the public network cell may refer to a public LTE network cell.

In the above embodiment, the public network UE may receive the redirection instruction message sent by the base station when releasing an RRC connection between the base station and the public network UE. The public network UE is prevented from occupying the resource of the high-speed-railway dedicated cell, so that the base station may better provide a service for the high-speed-train UE, which may particularly improve the performance of the high-speed-train UE when passing through the tunnel, effectively ensure the terminal service of the high-speed-train UE, and have the high availability.

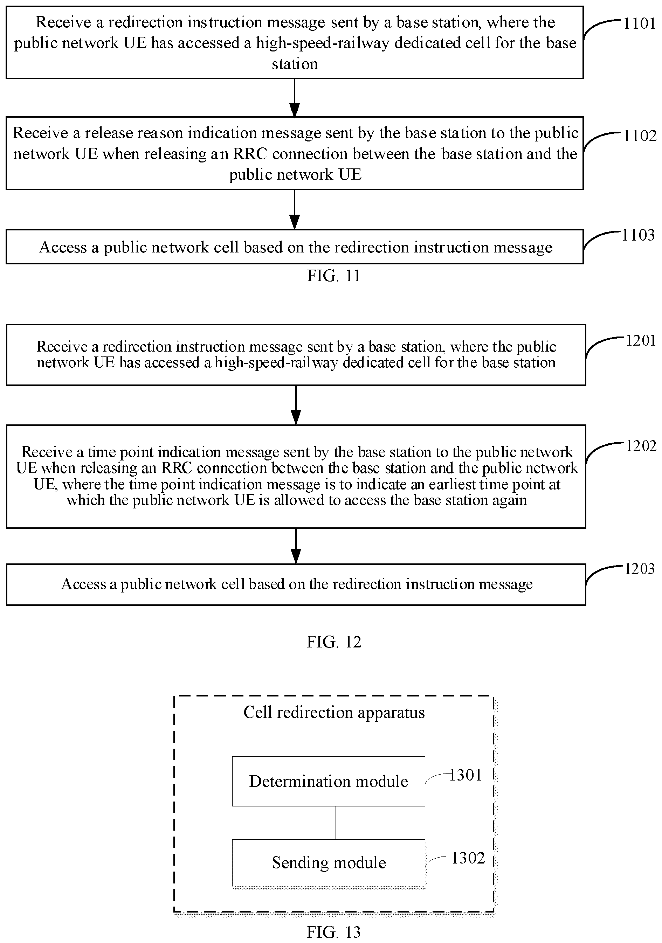

In some optional embodiments, referring to FIG. 11, FIG. 11 is a flowchart of a cell redirection method shown according to an embodiment. The method may be performed by a public network UE. The method may include the following steps 1101-1103.

At step 1101, a redirection instruction message sent by a base station is received, where the public network UE has accessed a high-speed-railway dedicated cell for the base station.

At step 1102, a release reason indication message sent by the base station to the public network UE when releasing an RRC connection between the base station and the public network UE is received.

The sequence of performing the step 1101 and step 1102 is not limited in the embodiment of the present disclosure.

The release reason indication message is to indicate that the reason for the base station to release the RRC connection is to ensure the service quality of the high-speed-train UE. The public network UE may no longer access the high-speed-railway dedicated cell for the base station based on the release reason indication message.

At step 1103, a public network cell is accessed based on the redirection instruction message.

In the embodiment of the present disclosure, the public network cell may refer to a public LTE network cell. In the above embodiment, the public network UE may no longer access the high-speed-railway dedicated cell for the base station based on the release reason indication message sent by the base station, to preventing the public network UE from occupying the resource of the high-speed-railway dedicated cell, so that the base station may better provide a service for the high-speed-train UE, which may particularly improve the performance of the high-speed-train UE when passing through the tunnel, effectively ensure the terminal service of the high-speed-train UE, and have the high availability.

In some optional embodiments, referring to FIG. 12, FIG. 12 is a flowchart of a cell redirection method shown according to an embodiment. The method may be performed by a public network UE. The method may include the following steps 1201-1203.

At step 1201, a redirection instruction message sent by a base station is received, where the public network UE has accessed a high-speed-railway dedicated cell for the base station.

At step 1202, a time point indication message sent by the base station to the public network UE when releasing an RRC connection between the base station and the public network UE is received, where the time point indication message is to indicate an earliest time point at which the public network UE is allowed to access the base station again.

The sequence of performing the step 1201 and step 1202 is not limited in the embodiment of the present disclosure.

At step 1203, a public network cell is accessed based on the redirection instruction message.

In the embodiment of the present disclosure, the public network cell may refer to a public LTE network cell.

At step 1204, a request message is sent to the base station when reaching the earliest time point or after reaching the earliest time point, where the request message is to request to establish the RRC connection with the base station.

In the above embodiment, the public network UE may no longer access the base station before reaching the earliest time point indicated by the base station, to preventing the public network UE from occupying the resource of the high-speed-railway dedicated cell, so that the base station may better provide a service for the high-speed-train UE, which may particularly improve the performance of the high-speed-train UE when passing through the tunnel, effectively ensure the terminal service of the high-speed-train UE, and have the high availability. In some optional embodiments, there may be a tunnel within the coverage range of the base station.

Corresponding to the above embodiments of application function implementation methods, the present disclosure further provides embodiments of application function implementation apparatuses.

Referring to FIG. 13, FIG. 13 is a block diagram of a cell redirection apparatus shown according to an exemplary embodiment. The apparatus is applied to a base station and includes:
a determination module 1301, configured to determine, in response to determining that a distance between a running high-speed-train and a tunnel meets a specified distance condition, a target proportion of one or more public network UEs being to perform cell redirection with respect to public network UEs that have accessed a high-speed-railway dedicated cell for the base station; and
a sending module 1302, configured to send a redirection instruction message to the one or more public network UEs of the target proportion, where the redirection instruction message instructs the one or more public network UEs to redirect to a public network cell.

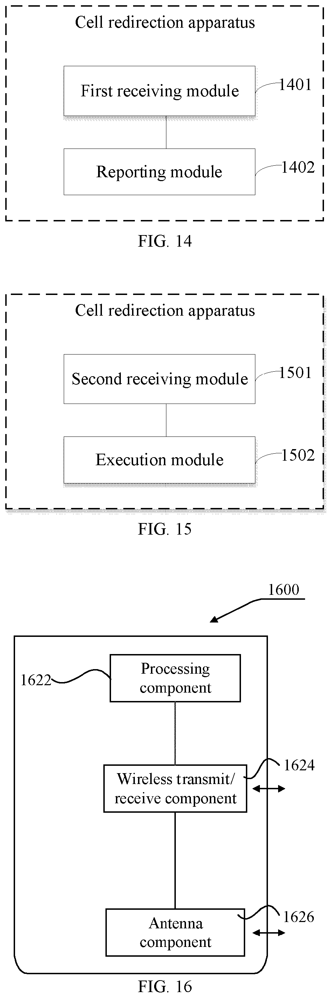

Referring to FIG. 14, FIG. 14 is a block diagram of a cell redirection apparatus shown according to an exemplary embodiment. The apparatus is applied to a high-speed-train UE and includes:
a first receiving module 1401, configured to receive configuration information sent by a base station, where the high-speed-train UE has accessed a high-speed-railway dedicated cell for the base station, where the configuration information is at least to configure the high-speed-train UE to measure and report association information, and the association information is for the base station to determine whether a distance between a running high-speed-train and a tunnel meets a specified distance condition; and
a reporting module 1402, configured to report, based on the configuration information, the measured association information to the base station.

Referring to FIG. 15, FIG. 15 is a cell redirection apparatus shown according to an exemplary embodiment. The apparatus is applied to a public network UE and includes:
a second receiving module 1501, configured to receive a redirection instruction message sent by a base station, where the public network UE has accessed a high-speed-railway dedicated cell for the base station; and
an execution module 1502, configured to access a public network cell based on the redirection instruction message.

Since the embodiments of the apparatuses substantially corresponds to the embodiments of the methods, and the related contents may refer to the description of the embodiments of the methods. The embodiments of the apparatuses described above are only schematic. Where the units explained as separate components may be or may not be physically separated, and the components displayed as units may be or may not be physical units, that is, they may be located in one place or may be distributed across a plurality of network units. A part or all of modules may be selected according to actual needs to achieve the purpose of the solutions in the present disclosure. Those skilled in the art may understand and implement other embodiments without a creative work.

Correspondingly, the present disclosure further provide a computer readable storage medium. The computer readable storage medium stores a computer program, and the computer program is configured to perform any one cell redirection method in the side of the base station.

Correspondingly, the present disclosure further provide a computer readable storage medium. The computer readable storage medium stores a computer program, and the computer program is configured to perform any one cell redirection method in the side of the high-speed-train UE.

Correspondingly, the present disclosure further provide a computer readable storage medium. The computer readable storage medium stores a computer program, and the computer program is configured to perform any one cell redirection method in the side of the public network UE.

Correspondingly, the present disclosure further provides a cell redirection apparatus, including:
a processor; and
a memory configured to store instructions executable by the processor;
where the processor is configured to perform any one cell redirection method in the side of the base station.

As shown in FIG. 16, FIG. 16 is a schematic structural diagram of a cell redirection apparatus 1600 shown according to an exemplary embodiment. The apparatus 1600 may be provided as the base station. Referring to FIG. 16, the apparatus 1600 includes a processing component 1622, a wireless transmit/receive component 1624, an antenna component 1626, and a signal processing part specific to a wireless interface. The processing component 1622 may further include at least one processor.

One processor of the processing component 1622 may be configured to perform any one cell redirection method in the side of the base station.

Correspondingly, the present disclosure further provides a cell redirection apparatus, including:
a processor; and
a memory configured to store instructions executable by the processor;
where the processor is configured to perform any one cell redirection method in the side of the high-speed-train UE.

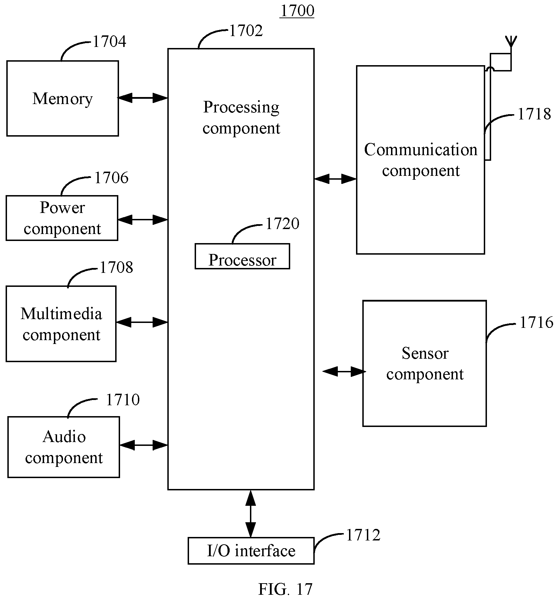

FIG. 17 is a block diagram of an electronic device 1700 shown according to an exemplary embodiment. For example, the electronic device 1700 may be a terminal, such as a mobile phone, a tablet computer, an e-book reader, a multimedia playing device, a wearable device, a vehicle-mounted terminal, an ipad, a smart television, etc., and the terminal may be a high-speed-train UE.

Referring to FIG. 17, the electronic device 1700 may include one or more of: a processing component 1702, a memory 1704, a power component 1706, a multimedia component 1708, an audio component 1710, an input/output (I/O) interface 1712, a sensor component 1716, and a communication component 1718.

The processing component 1702 typically controls the overall operation of the electronic device 1700, such as operations associated with display, phone calls, data communication, camera operations, and recording operations. The processing component 1702 may include one or more processors 1720 to execute instructions to complete all or part of the steps in the above cell redirection methods. Additionally, the processing component 1702 may include one or more modules to facilitate interaction between the processing component 1702 and other components. For example, the processing component 1702 may include a multimedia module to facilitate interaction between the multimedia component 1708 and the processing component 1702. For another example, the processing component 1702 may read executable instructions from a memory, to implement steps of a random access method provided in the above embodiments.

The memory 1704 is configured to store various types of data to support operations of the electronic device 1700. Examples of such data include instructions, contact data, phonebook data, messages, pictures, videos, etc., for any application program or method operating on the electronic device 1700. The memory 1704 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 1706 provides power to various components of the electronic device 1700. The power component 1706 may include a power supply management system, one or more power supplies, and other components that are associated with generating, managing, and distributing power for the electronic device 1700.

The multimedia component 1708 includes a display screen providing an output interface between the electronic device 1700 and the user. In some embodiments, the multimedia component 1708 includes a front facing camera and/or a rear facing camera. When the electronic device 1700 is in an operation mode, such as a shooting mode or a video mode, the front facing camera and/or the rear facing camera may receive external multimedia data. Each of the front facing camera and rear facing camera may be a fixed optical lens system or has a focal length and an optical zoom capability.

The audio component 1710 is configured to output and/or input audio signals. For example, the audio component 1710 includes a microphone (MIC). The microphone is configured to receive external audio signals when the electronic device 1700 is in the operating mode, such as a call mode, a recording mode, and a speech recognition mode. The received audio signals may be further stored in the memory 1704 or sent via the communication component 1718. In some embodiments, the audio component 1710 also includes a speaker for outputting the audio signals.

The I/O interface 1712 provides an interface between the processing component 1702 and peripheral interface modules. The peripheral interface modules may be keyboards, click wheels, buttons, etc. These buttons may include but are not limited to: a home button, a volume button, a start button, and a lock button.

The sensor component 1716 includes one or more sensors to provide various aspects of state assessment for the electronic device 1700. For example, the sensor component 1716 may detect an open/closed state of the electronic device 1700, relative positioning of components that are for example a display and keypad of the electronic device 1700. The sensor component 1716 may also detect a position change of the electronic device 1700 or of a component of the electronic device 1700, presence or absence of the user contacting with the electronic device 1700, an orientation or acceleration/deceleration of the electronic device 1700, and a temperature change of the electronic device 1700. The sensor component 1716 may include a proximity sensor configured to detect the presence of nearby objects without any physical contact. The sensor component 1716 may also include a light sensor, such as a CMOS or CCD image sensor, for use in an imaging application. In some embodiments, the sensor component 1716 may also include an acceleration sensor, a gyroscope sensor, a magnetic sensor, a pressure sensor, or a temperature sensor.

The communication component 1718 is configured to facilitate wired or wireless communication between the electronic device 1700 and other devices. The electronic device 1700 may access a wireless network based on a communication standard, such as WiFi, 2G, 3G, 4G, 5G, or a combination of them. In an exemplary embodiment, the communication component 1718 receives, via a broadcast channel, a broadcast signal or broadcast related information from an external broadcast management system. In an exemplary embodiment, the communication component 1718 further includes a near-field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the electronic device 1700 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above method for determining a hybrid automatic repeat request (HARQ) feedback delay.

In an exemplary embodiment, a non-transitory machine readable storage medium including instructions is also provided, such as the memory 1704 including the instructions. The above instructions may be executed by the processor 1720 of the electronic device 1700 to complete the above cell redirection method. For example, the non-transitory computer readable storage medium may be an ROM, a random access memory (RAM), a CD-ROM, a magnetic tape, a floppy disk, an optical data storage device, etc.

Correspondingly, the present disclosure further provides a cell redirection apparatus, including:
a processor; and
a memory configured to store instructions executable by the processor;
where the processor is configured to perform any one cell redirection method in the side of the public network UE.

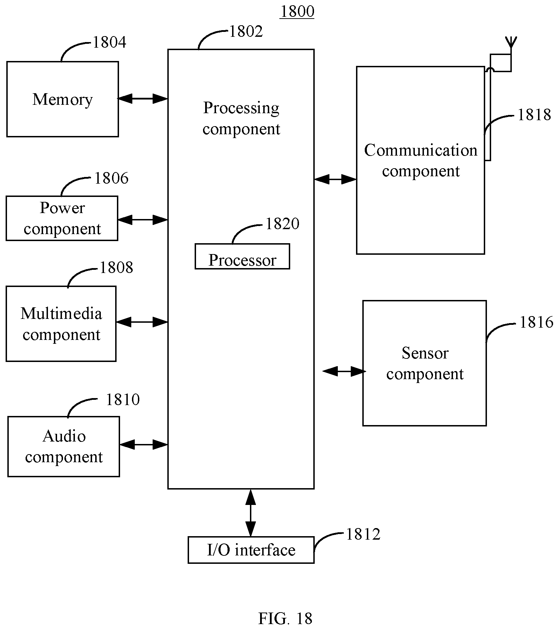

FIG. 18 is a block diagram of an electronic device 1800 shown according to an exemplary embodiment. For example, the electronic device 1800 may be a terminal, such as a mobile phone, a tablet computer, an e-book reader, a multimedia playing device, a wearable device, a vehicle-mounted terminal, an ipad, a smart television, etc., and the terminal may be a public network UE.

Referring to FIG. 18, the electronic device 1800 may include one or more of: a processing component 1802, a memory 1804, a power component 1806, a multimedia component 1808, an audio component 1810, an input/output (I/O) interface 1812, a sensor component 1816, and a communication component 1818.

The processing component 1802 typically controls the overall operation of the electronic device 1800, such as operations associated with display, phone calls, data communication, camera operations, and recording operations. The processing component 1802 may include one or more processors 1820 to execute instructions to complete all or part of the steps in the above cell redirection methods. Additionally, the processing component 1802 may include one or more modules to facilitate interaction between the processing component 1802 and other components. For example, the processing component 1802 may include a multimedia module to facilitate interaction between the multimedia component 1808 and the processing component 1802. For another example, the processing component 1802 may read executable instructions from a memory, to implement steps of the cell redirection method provided in the above embodiments.

The memory 1804 is configured to store various types of data to support operations of the electronic device 1800. Examples of such data include instructions, contact data, phonebook data, messages, pictures, videos, etc., for any application program or method operating on the electronic device 1800. The memory 1804 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 1806 provides power to various components of the electronic device 1800. The power component 1806 may include a power supply management system, one or more power supplies, and other components that are associated with generating, managing, and distributing power for the electronic device 1800.

The multimedia component 1808 includes a display screen providing an output interface between the electronic device 1800 and the user. In some embodiments, the multimedia component 1808 includes a front facing camera and/or a rear facing camera. When the electronic device 1800 is in an operation mode, such as a shooting mode or a video mode, the front facing camera and/or the rear facing camera may receive external multimedia data. Each of the front facing camera and rear facing camera may be a fixed optical lens system or has a focal length and an optical zoom capability.

The audio component 1810 is configured to output and/or input audio signals. For example, the audio component 1810 includes a microphone (MIC). The microphone is configured to receive external audio signals when the electronic device 1800 is in the operating mode, such as a call mode, a recording mode, and a speech recognition mode. The received audio signals may be further stored in the memory 1804 or sent via the communication component 1818. In some embodiments, the audio component 1810 also includes a speaker for outputting the audio signals.

The I/O interface 1812 provides an interface between the processing component 1802 and peripheral interface modules. The peripheral interface modules may be keyboards, click wheels, buttons, etc. These buttons may include but are not limited to: a home button, a volume button, a start button, and a lock button.

The sensor component 1816 includes one or more sensors to provide various aspects of state assessment for the electronic device 1800. For example, the sensor component 1816 may detect an open/closed state of the electronic device 1800, relative positioning of components that are for example a display and keypad of the electronic device 1800. The sensor component 1816 may also detect a position change of the electronic device 1800 or of a component of the electronic device 1800, presence or absence of the user contacting with the electronic device 1800, an orientation or acceleration/deceleration of the electronic device 1800, and a temperature change of the electronic device 1800. The sensor component 1816 may include a proximity sensor configured to detect the presence of nearby objects without any physical contact. The sensor component 1816 may also include a light sensor, such as a CMOS or CCD image sensor, for use in an imaging application. In some embodiments, the sensor component 1816 may also include an acceleration sensor, a gyroscope sensor, a magnetic sensor, a pressure sensor, or a temperature sensor.

The communication component 1818 is configured to facilitate wired or wireless communication between the electronic device 1800 and other devices. The electronic device 1800 may access a wireless network based on a communication standard, such as WiFi, 2G, 3G, 4G, 5G, or a combination of them. In an exemplary embodiment, the communication component 1818 receives, via a broadcast channel, a broadcast signal or broadcast related information from an external broadcast management system. In an exemplary embodiment, the communication component 1818 further includes a near-field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the electronic device 1800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above method for determining a hybrid automatic repeat request (HARQ) feedback delay.

In an exemplary embodiment, a non-transitory machine readable storage medium including instructions is also provided, such as the memory 1804 including the instructions. The above instructions may be executed by the processor 1820 of the electronic device 1800 to complete the above cell redirection method. For example, the non-transitory computer-readable storage medium may be an ROM, a random access memory (RAM), a CD-ROM, a magnetic tape, a floppy disk, an optical data storage device, etc.

Those skilled in the art will easily come up with other implementation solutions of the present disclosure after considering the specification and practicing the present disclosure disclosed herein. The present disclosure aims to cover any variations, uses, or adaptive changes of the present disclosure, which follow general principles of the present disclosure and include common knowledge or customary technical means in the art not disclosed in the present disclosure. The specification and embodiments are only considered exemplary, and the true scope and spirit of the present disclosure are indicated by the following claims.

It should be understood that the present disclosure is not limited to the precise structure described above and shown in the accompanying drawings, and various modifications and changes may be made without departing from its scope. The scope of the present disclosure is limited only by the appended claims.

## Claims

1. A cell redirection method, performed by a base station and comprising:
determining, in response to determining that a distance between a running high-speed-train and a tunnel meets a specified distance condition and with respect to public network user equipments, UEs, that have accessed a high-speed-railway dedicated cell for the base station, a target proportion of one or more public network UEs being to perform cell redirection; and
sending a redirection instruction message to the one or more public network UEs of the target proportion, wherein the redirection instruction message instructs the one or more public network UEs to redirect to a public network cell.

2. The method of claim 1, wherein the determining that a distance between a running high-speed-train and a tunnel meets a specified distance condition, comprises any one of:
determining that the distance meets the specified distance condition, in response to determining that the distance is less than or equal to a preset distance threshold; or
determining that the distance meets the specified distance condition, in response to determining that the distance is within a preset distance threshold range.

3. The method of claim 1, further comprising:
sending configuration information to a high-speed-train UE that has accessed the high-speed-railway dedicated cell, wherein the configuration information is at least to configure the high-speed-train UE to measure and report association information, and the association information is for the base station to determine whether the distance meets the specified distance condition.

4. The method of claim 3, wherein the association information comprises at least one of:
a signal receiving strength of the high-speed-train UE; or
first geographic location information of the high-speed-train UE.

5. The method of claim 4, wherein in a case that the association information is the signal receiving strength of the high-speed-train UE, the method further comprises:
receiving the signal receiving strength reported by the high-speed-train UE; and
wherein the determining that a distance between a running high-speed-train and a tunnel meets a specified distance condition, comprises:
determining, in response to determining that a decrease amplitude of the signal receiving strength reported by the high-speed-train UE is greater than or equal to a preset amplitude, that the distance meets the specified distance condition.

6. The method of claim 4, wherein in a case that the association information is the first geographic location information of the high-speed-train UE, the method further comprises:
receiving the first geographic location information reported by the high-speed-train UE; and
determining, based on the first geographic location information and predetermined second geographic location information of the tunnel, the distance between the high-speed-train and the tunnel; and
determining, according to the distance, that the distance between the high-speed-train and the tunnel meets the specified distance condition.

7. The method of any one of claims 3 to 6, wherein the configuration information is further to configure a reporting condition for the high-speed-train UE to report the association information.

8. The method of claim 7, wherein the reporting condition comprises any one of:
a signal receiving strength of the high-speed-train UE being less than or equal to a preset threshold; or
a duration in which the signal receiving strength of the high-speed-train UE is less than or equal to the preset threshold reaching a preset duration.

9. The method of claim 1, wherein the determining, with respect to public network UEs that have accessed a high-speed-railway dedicated cell for the base station, a target proportion of one or more public network UEs being to perform cell redirection, comprises any one of:
determining the target proportion according to a data volume required by high-speed-train UEs that have accessed the high-speed-railway dedicated cell, wherein the target proportion is positively correlated with the data volume;
determining the target proportion according to a proportion of the data volume to a total load amount of the base station, wherein the target proportion is positively correlated with the proportion; or
determining the target proportion based on a moving speed of the high-speed-train, wherein the target proportion is positively correlated with the moving speed of the high-speed-train.

10. The method of claim 9, wherein the data volume comprises any one of:
a total volume of uplink data;
a total volume of downlink data; or
a total volume of the uplink data and the downlink data.

11. The method of claim 1, wherein the sending a redirection instruction message to the one or more public network UEs of the target proportion, comprises:
sending, when releasing one or more radio resource control, RRC, connections between the base station and the one or more public network UEs of the target proportion, the redirection instruction message to the one or more public network UEs of the target proportion.

12. The method of claim 1, further comprising:
sending, when releasing one or more RRC connections between the base station and the one or more public network UEs of the target proportion, a release reason indication message to the one or more public network UEs of the target proportion,
wherein the release reason indication message is to indicate that a reason for the base station to release an RRC connection is to ensure service quality of a high-speed-train UE.

13. The method of claim 1, further comprising:
sending, when releasing one or more RRC connections between the base station and the one or more public network UEs of the target proportion, a time point indication message to the one or more public network UEs of the target proportion,
wherein the time point indication message is to indicate an earliest time point at which the public network UE is allowed to access the base station again.

14. The method of claim 1, wherein the tunnel is within a coverage range of the base station.

15. A cell redirection method, performed by a high-speed-train UE and comprising:
receiving configuration information sent by a base station, wherein the high-speed-train UE has accessed a high-speed-railway dedicated cell for the base station, wherein the configuration information is at least to configure the high-speed-train UE to measure and report association information, and the association information is for the base station to determine whether a distance between a running high-speed-train and a tunnel meets a specified distance condition; and
reporting, based on the configuration information, the measured association information to the base station.

16. The method of claim 15, wherein the association information comprises at least one of:
a signal receiving strength of the high-speed-train UE; or
first geographic location information of the high-speed-train UE.

17. The method of claim 15 or 16, wherein the configuration information is further to configure a reporting condition for the high-speed-train UE to report the association information;
the reporting, based on the configuration information, the measured association information to the base station, comprises:
reporting, in response to determining that the reporting condition is met, the measured association information to the base station.

18. The method of claim 17, wherein the reporting condition comprises any one of:
a signal receiving strength of the high-speed-train UE being less than or equal to a preset threshold; or
a duration in which the signal receiving strength of the high-speed-train UE is less than or equal to the preset threshold reaching a preset duration.

19. The method of claim 15, wherein the tunnel is within a coverage range of the base station.

20. A cell redirection method, performed by a public network UE and comprising:
receiving a redirection instruction message sent by a base station, wherein the public network UE has accessed a high-speed-railway dedicated cell for the base station; and
accessing a public network cell based on the redirection instruction message.

21. The method of claim 20, wherein the receiving a redirection instruction message sent by a base station, comprises:
receiving the redirection instruction message sent by the base station to the public network UE when releasing a radio resource control, RRC, connection between the base station and the public network UE.

22. The method of claim 20, further comprising:
receiving a release reason indication message sent by the base station to the public network UE when releasing an RRC connection between the base station and the public network UE, wherein the release reason indication message is to indicate that a reason for the base station to release the RRC connection is to ensure service quality of a high-speed-train UE.

23. The method of claim 20, further comprising:
receiving a time point indication message sent by the base station to the public network UE when releasing an RRC connection between the base station and the public network UE, wherein the time point indication message is to indicate an earliest time point at which the public network UE is allowed to access the base station again; and
sending a request message to the base station when reaching the earliest time point or after reaching the earliest time point, wherein the request message is to request to establish the RRC connection with the base station.

24. The method of claim 20, wherein there is a tunnel within a coverage range of the base station.

25. A cell redirection apparatus, applied to a base station and comprising:
a determination module, configured to determine, in response to determining that a distance between a running high-speed-train and a tunnel meets a specified distance condition and with respect to public network user equipments, UEs, that have accessed a high-speed-railway dedicated cell for the base station, a target proportion of one or more public network UEs being to perform cell redirection; and
a sending module, configured to send a redirection instruction message to the one or more public network UEs of the target proportion, wherein the redirection instruction message instructs the one or more public network UEs to redirect to a public network cell.

26. A cell redirection apparatus, applied to a high-speed-train user equipment, UE, and comprising:
a first receiving module, configured to receive configuration information sent by a base station, wherein the high-speed-train UE has accessed a high-speed-railway dedicated cell for the base station, wherein the configuration information is at least to configure the high-speed-train UE to measure and report association information, and the association information is for the base station to determine whether a distance between a running high-speed-train and a tunnel meets a specified distance condition; and
a reporting module, configured to report, based on the configuration information, the measured association information to the base station.

27. A cell redirection apparatus, applied to a public network user equipment, UE, and comprising:
a second receiving module, configured to receive a redirection instruction message sent by a base station, wherein the public network UE has accessed a high-speed-railway dedicated cell for the base station; and
an execution module, configured to access a public network cell based on the redirection instruction message.

28. A computer readable storage medium, storing a computer program, wherein the computer program is configured to perform the cell redirection method of any one of claims 1 to 14.

29. A computer readable storage medium, storing a computer program, wherein the computer program is configured to perform the cell redirection method of any one of claims 15 to 19.

30. A computer readable storage medium, storing a computer program, wherein the computer program is configured to perform the cell redirection method of any one of claims 20 to 24.

31. A cell redirection apparatus, comprising:
a processor; and
a memory configured to store instructions executable by the processor;
wherein the processor is configured to perform the cell redirection method of any one of claims 1 to 14.

32. A cell redirection apparatus, comprising:
a processor; and
a memory configured to store instructions executable by the processor;
wherein the processor is configured to perform the cell redirection method of any one of claims 15 to 19.

33. A cell redirection apparatus, comprising:
a processor; and
a memory configured to store instructions executable by the processor;
wherein the processor is configured to perform the cell redirection method of any one of claims 20 to 24.
